# EUROPÄISCHE PATENTANMELDUNG

(11) **EP 3 828 498 A1**
(43) Veröffentlichungstag der Anmeldung: **02.06.2021**
(21) Anmeldenummer: 19211552.5
(22) Anmeldetag: 26.11.2019
(51) Int. Cl.: G01C 15/00, G01C 15/02, G01S 17/00

(54) **ZUBEHÖRTEIL FÜR EINEN LASEREMPFÄNGER ZUM ÜBERTRAGEN EINER LASERLINIE**

(71) Anmelder: Hilti Aktiengesellschaft, 9494 Schaan (LI)
(72) Erfinder: Calkic, Ermin, 9470 Buchs (CH); Lampert, Patrick, 9486 Schaanwald (LI)
(74) Vertreter: Hilti Aktiengesellschaft Corporate Intellectual Property

(57) **Zusammenfassung**

Zubehörteil (30) für einen Laserempfänger zum Übertragen einer Laserlinie auf eine Arbeitsfläche, umfassend eine Grundplatte (35) mit einer Vorderseite und einer Rückseite, mit der das Zubehörteil (30) auf der Arbeitsfläche anordbar ist, eine Verbindungseinrichtung (36) zum Verbinden des Laserempfängers mit dem Zubehörteil (30) und ein Drehgelenk (37), das zwischen der Grundplatte (35) und der Verbindungseinrichtung (36) angeordnet ist, wobei die Verbindungseinrichtung (36) um eine Drehachse (39) relativ zur Grundplatte (35) zwischen einem ersten Winkel und einem zweiten Winkel drehbar ist.

## Beschreibung

### Technisches Gebiet

Die vorliegende Erfindung betrifft ein Zubehörteil für einen Laserempfänger zum Übertragen einer Laserlinie gemäß dem Oberbegriff des Anspruchs 1.

### Stand der Technik

Um die Strahlmitte eines Laserstrahls, der von einem rotierenden Rotationslaser oder einem Linienlaser erzeugt wird, zu detektieren, werden Laserempfänger eingesetzt, die ein Gehäuse mit entlang einer Längsseite verlaufendem zeilenartigem Sensorelement zum Erfassen des Laserstrahles aufweisen. Dabei ist das Sensorelement derart auf den Laserstrahl auszurichten, dass der Laserstrahl das Sensorelement senkrecht und mittig schneidet. Auf einem Display des Laserempfängers wird angezeigt, wann die Mitte des Sensorelementes getroffen ist. Diesem Bereich ist eine Markierung oder Einkerbung in einer Längsseite des Gehäuses zugeordnet, mit der die Laserlinie auf die Arbeitsfläche übertragen werden kann.

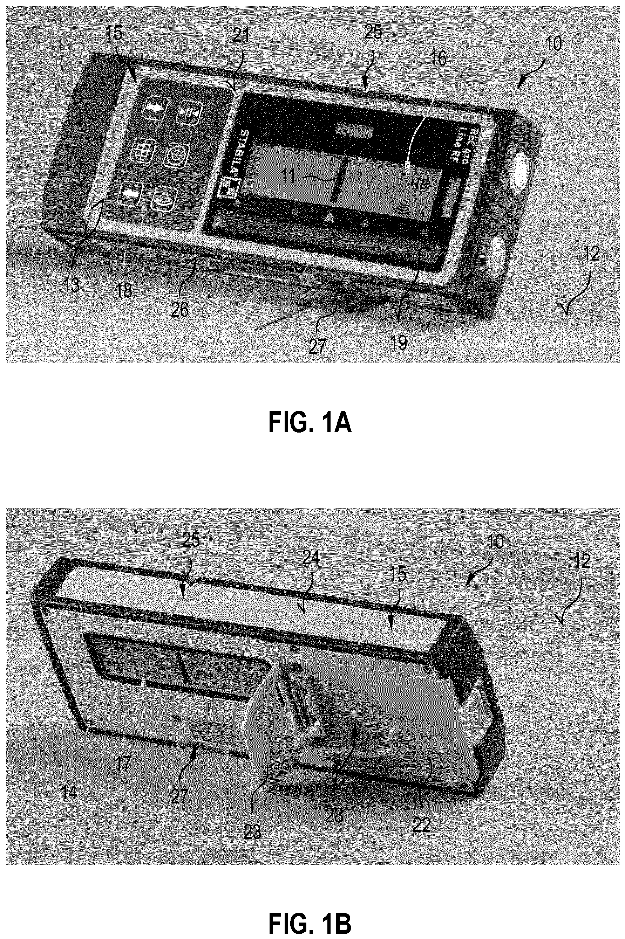

**FIGN. 1A****, B** zeigen einen bekannten Laserempfänger **10** mit einem Zubehörteil zum Übertragen einer Laserlinie **11** auf eine Arbeitsfläche **12.** Dabei zeigt FIG. 1A den Laserempfänger 10 in einer Ansicht auf eine Vorderseite **13** des Laserempfängers 10 und FIG. 1B in einer Ansicht auf eine Rückseite **14** des Laserempfängers 10. Der Laserempfänger 10 umfasst ein Gehäuse **15,** ein erstes Display **16,** ein zweites Display **17,** eine Bedienungseinrichtung **18** mit mehreren Bedienungselementen und ein Sensorelement **19.** Das erste Display 16, die Bedienungseinrichtung 18 und das Sensorelement 19 sind in einer Vorderfläche **21** des Gehäuses 15 angeordnet. Auf einer Rückfläche **22** des Gehäuses 15 sind neben dem zweiten Display 17 eine Stahlplatte und ein ausklappbares Stützelement **23** angeordnet. Die Stahlplatte ist in das Gehäuse 15 integriert; der Laserempfänger 10 kann mithilfe der Stahlplatte direkt an einer Magnethalterung oder an magnetischen Gegenständen befestigt werden. In eine erste Seitenfläche **24** des Gehäuses 15 ist ein erstes Markierungselement **25** integriert und in einer zweite Seitenfläche **26** des Gehäuses 15 ist ein ausklappbares zweites Markierungselement **27** angeordnet.

Das Stützelement 23 ist zwischen einer eingeklappten Position und einer ausgeklappten Position verstellbar. In der Rückfläche 22 des Gehäuses 15 ist eine Vertiefung **28** für das Stützelement 23, das in der eingeklappten Position bündig mit dem Gehäuse 15 abschließt, so dass der Laserempfänger 10 mit der Rückfläche 22 auf einer ebenen Arbeitsfläche positioniert werden kann. Das Stützelement 23 kann um ca. 90° ausgeklappt werden und ermöglicht eine Positionierung des Laserempfängers 10 auf dem Boden bzw. auf einer waagerechten Arbeitsfläche.

Der bekannte Laserempfänger 10 weist den Nachteil auf, dass das Stützelement 23 lediglich mit einer schmalen Auflagefläche an der Arbeitsfläche 12 aufliegt und die Position des Laserempfängers 10 beim Übertragen der Laserlinie 11 auf die Arbeitsfläche 12 instabil ist. Außerdem kann die Winkelposition des bekannten Laserempfängers 10 nicht verändert werden, so dass das Sensorelement 19 nicht optimal zum auftreffenden Laserstrahl ausgerichtet werden kann.

### Darstellung der Erfindung

Die Aufgabe der vorliegenden Erfindung besteht in der Entwicklung eines Zubehörteils für einen Laserempfänger, welches das Übertragen einer Laserlinie von einem Laserempfänger auf die Arbeitsfläche für den Bediener erleichtert. Dabei soll die Laserlinie mit hoher Genauigkeit auf die Arbeitsfläche übertragen werden.

Diese Aufgabe wird bei dem eingangs genannten Zubehörteil für einen Laserempfänger erfindungsgemäß durch die Merkmale des unabhängigen Anspruchs 1 gelöst. Vorteilhafte Weiterbildungen sind in den abhängigen Ansprüchen angegeben.

Das erfindungsgemäße Zubehörteil für einen Laserempfänger zum Übertragen einer Laserlinie auf eine Arbeitsfläche umfasst:
▪ eine Grundplatte mit einer Vorderseite und einer Rückseite, mit der das Zubehörteil auf der Arbeitsfläche anordbar ist,
▪ eine Verbindungseinrichtung zum Verbinden des Laserempfängers mit dem Zubehörteil und
▪ ein Drehgelenk, das zwischen der Grundplatte und der Verbindungseinrichtung angeordnet ist, wobei die Verbindungseinrichtung um eine Drehachse relativ zur Grundplatte zwischen einem ersten Winkel und einem zweiten Winkel drehbar ist.

Das erfindungsgemäße Zubehörteil ermöglicht eine stabile Positionierung des Laserempfängers auf der Arbeitsfläche und eine genaue Ausrichtung des Laserempfängers auf den zu erfassenden Laserstrahl. Die Rückseite der Grundplatte wird auf der Arbeitsfläche angeordnet, auf die die Laserlinie übertragen werden soll. Dabei wird die Größe der Grundplatte an die Größe des Laserempfängers, der mit dem Zubehörteil verbunden werden soll, angepasst und wird so groß gewählt, dass das Zubehörteil stabil auf der Arbeitsfläche positioniert werden kann. Das Drehgelenk, das zwischen der Grundplatte und der Verbindungseinrichtung angeordnet ist, ermöglicht eine genaue Ausrichtung des Laserempfängers zum Laserstrahl, so dass das Sensorelement möglichst senkrecht zum Laserstrahl angeordnet ist. Der erste und zweite Winkel begrenzen einen Winkelbereich, in dem das Drehgelenk verstellbar ist.

Bevorzugt ist das Drehgelenk in mindestens einer Drehposition zwischen dem ersten Winkel und dem zweiten Winkel arretierbar. Dabei bedeutet arretierbar, dass das Drehgelenk sicher in der Drehposition angeordnet ist und die Drehposition ohne Eingriff des Bedieners nicht verlassen wird. Ein Drehgelenk, das in mindestens einer Drehposition zwischen dem ersten und zweiten Winkel arretierbar ist, ermöglicht es, den Laserempfänger stabil in einer Drehposition anzuordnen, so dass die Laserlinie, die der Laserstrahl auf dem Sensorelement erzeugt, auf die Arbeitsfläche übertragen werden kann.

Besonders bevorzugt ist das Drehgelenk in mehreren Drehpositionen zwischen dem ersten Winkel und dem zweiten Winkel arretierbar. Ein Drehgelenk, das in mehreren Drehpositionen zwischen dem ersten und zweiten Winkel arretierbar ist, ermöglicht, den Laserempfänger so zum Laserstrahl anzuordnen, dass der Laserstrahl möglichst senkrecht auf das Sensorelement auftrifft. Die Sichtbarkeit der Laserlinie ist unter anderem abhängig vom Winkel, unter dem der Laserstrahl auf das Sensorelement auftrifft, wobei ein senkrechtes Auftreffen bevorzugt ist.

Besonders bevorzugt ist das Drehgelenk in jeder Drehposition zwischen dem ersten Winkel und dem zweiten Winkel arretierbar. Die Sichtbarkeit der Laserlinie ist unter anderem abhängig vom Winkel, unter dem der Laserstrahl auf das Sensorelement auftrifft, wobei ein senkrechtes Auftreffen bevorzugt ist. Ein Drehgelenk, das in jeder Drehposition zwischen dem ersten und zweiten Winkel arretierbar ist, ermöglicht, den Laserempfänger so zum Laserstrahl anzuordnen, dass der Laserstrahl senkrecht auf das Sensorelement auftrifft.

In einer ersten bevorzugten Ausführung weist das Zubehörteil ein Markierungselement auf, das an einer Seitenfläche der Grundplatte angeordnet ist. Ein Markierungselement, das an einer Seitenfläche der Grundplatte angeordnet ist, hat den Vorteil, dass das Markierungselement auf der Arbeitsfläche aufliegt und die Laserlinie mit hoher Genauigkeit auf die Arbeitsfläche übertragen werden kann.

Bevorzugt ist das Markierungselement als klappbares Lineal um eine Schwenkachse zwischen einer eingeklappten Position und einer ausgeklappten Position verstellbar. Ein als klappbares Lineal ausgebildetes Markierungselement hat den Vorteil, dass das Markierungselement länger ausgebildet sein kann als ein festes Markierungselement, das an einer Seitenfläche der Grundplatte angeordnet ist.

Besonders bevorzugt ist die Schwenkachse senkrecht zur Drehachse des Drehgelenkes angeordnet. Wenn die Schwenkachse des Markierungselementes senkrecht zur Drehachse des Drehgelenkes angeordnet ist, kann das Markierungselement in der eingeklappten Position in die Seitenfläche der Grundplatte eintauchen und bündig mit der Seitenfläche abschließen. Außerdem kann bei dieser Anordnung der Schwenkachse die Größe der Grundplatte ausgenutzt werden. Je länger das Markierungselement ist, desto besser kann die Laserlinie vom Bediener auf die Arbeitsfläche übertragen werden.

In einer zweiten bevorzugten Ausführung weist das Zubehörteil ein erstes Markierungselement, das an einer ersten Seitenfläche der Grundplatte angeordnet ist, und ein zweites Markierungselement, das an einer zweiten Seitenfläche der Grundplatte angeordnet ist, auf. Wenn die Grundplatte ein erstes und zweites Markierungselement aufweist, die an der ersten bzw. zweiten Seitenfläche der Grundplatte angeordnet sind, kann die Laserlinie mit hoher Genauigkeit auf beide Seiten der Arbeitsfläche übertragen werden.

Bevorzugt ist das erste Markierungselement als klappbares erstes Lineal um eine erste Schwenkachse zwischen einer eingeklappten Position und einer ausgeklappten Position verstellbar und das zweite Markierungselement als klappbares zweites Lineal um eine zweite Schwenkachse zwischen einer eingeklappten Position und einer ausgeklappten Position verstellbar. Ein klappbares erstes und zweites Lineal haben den Vorteil, dass das erste und zweite Markierungselement länger ausgebildet sein können als feste Markierungselemente, die an den Seitenflächen der Grundplatte angeordnet sind.

Besonders bevorzugt ist die erste Schwenkachse senkrecht zur Drehachse des Drehgelenkes angeordnet und die zweite Schwenkachse senkrecht zur Drehachse des Drehgelenkes angeordnet. Wenn die erste und zweite Schwenkachse der Markierungselemente senkrecht zur Drehachse des Drehgelenkes angeordnet sind, können das erste und zweite Markierungselement in der eingeklappten Position in die erste bzw. zweite Seitenfläche der Grundplatte eintauchen und bündig mit den Seitenflächen abschließen.

In einer dritten bevorzugten Ausführungsform weist das Zubehörteil eine Sprüheinrichtung auf, die einen Behälter, ein Steuerelement und ein Betätigungselement umfasst. Ein Zubehörteil mit einer Sprüheinrichtung ermöglicht eine einfache Übertragung der Laserlinie auf die Arbeitsfläche. Wenn der Laserstrahl auf die Mitte des Sensorelementes auftrifft, kann die Sprüheinrichtung die Laserlinie auf die Arbeitsfläche übertragen. Dazu weist die Sprüheinrichtung beispielsweise eine Düse auf, die parallel zur Laserlinie ausgerichtet ist.

Bevorzugt weist die Sprüheinrichtung eine Benutzerschnittstelle und/oder eine Schnittstelle zum Laserempfänger auf. Eine Sprüheinrichtung, die eine Benutzerschnittstelle und/oder eine Schnittstelle zum Laserempfänger aufweist, bietet die Möglichkeit, eine Laserlinie durch Auslösen des Bedieners oder durch Auslösen des Laserempfängers auf die Arbeitsfläche zu übertragen.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIGN. 1A, B: einen bekannten Laserempfänger mit einem Zubehörteil zum Übertragen einer Laserlinie auf eine Arbeitsfläche;
- FIG. 2: eine erste Ausführungsform eines erfindungsgemäßen Zubehörteils zum Übertragen einer Laserlinie auf eine Arbeitsfläche, das mit einem Laserempfänger kombiniert ist;
- FIG. 3: das Zubehörteil der FIG. 2 ohne den Laserempfänger;
- FIGN. 4A, B: das Zubehörteil der FIG. 2, welches um eine Drehachse verstellbar ist, in einer ersten Drehposition (FIG. 4A) und in einer zweiten Drehposition (FIG. 4B);
- FIGN. 5A-C: eine zweite Ausführungsform eines erfindungsgemäßen Zubehörteils zum Übertragen einer Laserlinie auf eine Arbeitsfläche, das mit einem Laserempfänger kombiniert ist, in einer dreidimensionalen Darstellung (FIG. 5A), in einer Ansicht auf die Vorderseite des Laserempfängers (FIG. 5B) und in einer Ansicht auf eine Seitenfläche des Laserempfängers (FIG. 5C);
- FIGN. 6A-C: das Zubehörteil der FIG. 5, welches um eine Drehachse verstellbar ist, in einer ersten Drehposition (FIG. 6A), einer zweiten Drehposition (FIG. 6B) und einer dritten Drehposition (FIG. 6C).

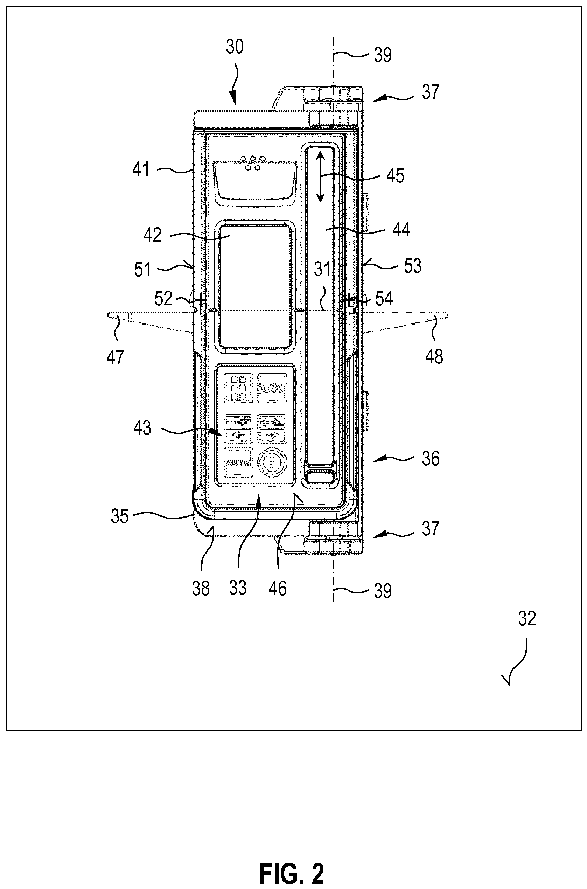

**FIG. 2** zeigt eine erste Ausführungsform eines erfindungsgemäßen Zubehörteils **30** zum Übertragen einer Laserlinie **31** auf eine Arbeitsfläche **32.** Das Zubehörteil 30 ist mit einem Laserempfänger **33** kombiniert und wird vom Bediener an die als Wand ausgebildete Arbeitsfläche 32 gehalten. Die Aufgabe besteht für den Bediener darin, die Laserlinie 31 möglichst genau auf die Arbeitsfläche 32 zu übertragen.

Das Zubehörteil 30 umfasst eine Grundplatte **35,** eine Verbindungseinrichtung **36,** die das Zubehörteil 30 mit dem Laserempfänger 33 verbindet, und ein Drehgelenk **37.** Die Grundplatte 35 weist eine Vorderseite **38** und eine der Vorderseite 38 gegenüberliegende Rückseite auf. Die Rückseite der Grundplatte ist eben ausgebildet und dient dazu, das Zubehörteil 30 mit dem Laserempfänger 33 auf der Arbeitsfläche 32 zu positionieren. Die Größe der Grundplatte 35 ist an die Größe des Laserempfängers 33 angepasst und wird so groß gewählt, dass das Zubehörteil 30 stabil auf der Arbeitsfläche 32 positioniert werden kann. Das Drehgelenk 37 verbindet die Verbindungseinrichtung 36 mit der Grundplatte 35, wobei die Verbindungseinrichtung 36 um eine Drehachse **39** relativ zur Grundplatte 35 drehbar ist.

Der Laserempfänger 33 umfasst ein Gehäuse **41,** ein Display **42,** eine Bedienungseinrichtung **43** mit mehreren Bedienungselementen und ein längliches Sensorelement **44,** dessen Längsrichtung die Messrichtung **45** des Laserempfängers 33 festlegt. Das Display 42, die Bedienungseinrichtung 43 und das Sensorelement 44 sind in einer Vorderfläche **46** des Gehäuses 41 angeordnet. Der Laserempfänger 33 weist in einer Seitenfläche zwei Magnetelemente oder zwei Stahlelemente auf, mit deren Hilfe der Laserempfänger 33 über eine Magnetverbindung befestigt werden kann.

Um den Bediener beim Übertragen der Laserlinie 31 auf die Arbeitsfläche 32 zu unterstützen, weist das Zubehörteil 30 ein erstes Markierungselement **47** und ein zweites Markierungselement **48** auf, die an der Grundplatte 35 befestigt sind. Das erste und zweite Markierungselement 47, 48 sind als klappbare Lineale ausgebildet und um eine Schwenkachse zwischen einem eingeklappten Zustand und einem ausgeklappten Zustand verstellbar. Das erste Markierungselement 47 ist an einer ersten Seitenfläche **51** der Grundplatte 35 angeordnet und um eine erste Schwenkachse **52** verstellbar und das zweite Markierungselement 48 ist an einer zweiten Seitenfläche **53** der Grundplatte 35 angeordnet und um eine zweite Schwenkachse **54** verstellbar.

Die erste und zweite Schwenkachse 52, 54 sind parallel zu den ersten und zweiten Seitenflächen 51, 53 sowie senkrecht zur Drehachse 39 des Drehgelenkes 37 angeordnet. Diese Anordnung hat den Vorteil, dass das erste und zweite Markierungselement 47, 48 länger ausgebildet werden können als Markierungselemente, deren Schwenkachsen parallel zur Drehachse 39 des Drehgelenkes 37 angeordnet sind.

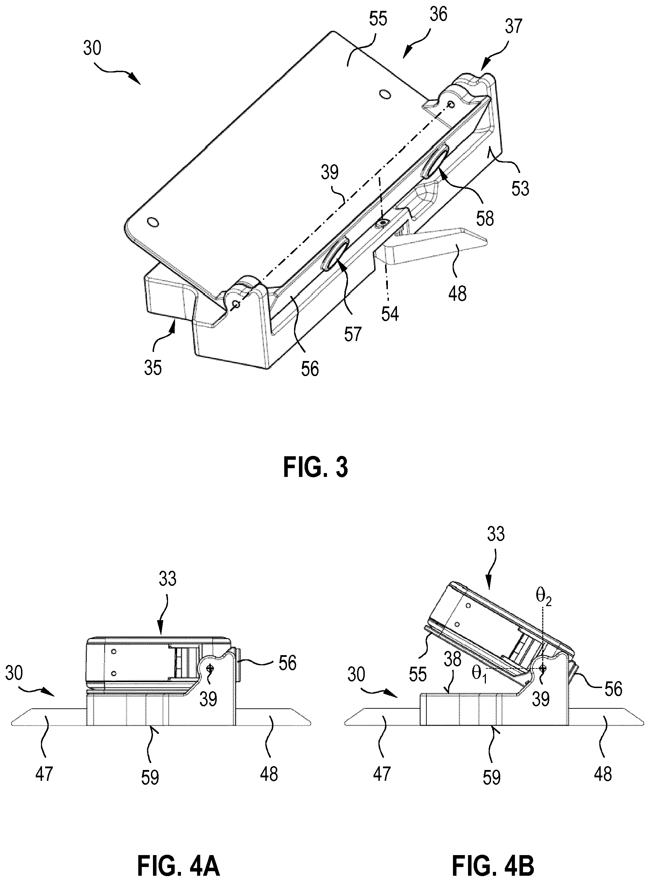

**FIG. 3** das erfindungsgemäße Zubehörteil 30 der FIG. 2 ohne den Laserempfänger 33. Das Zubehörteil 30 umfasst die Grundplatte 35, die Verbindungseinrichtung 36 und das Drehgelenk 37.

Die Verbindungseinrichtung 36 dient dazu, das Zubehörteil 30 mit dem Laserempfänger 33 zu verbinden. Im Ausführungsbeispiel ist die Verbindungseinrichtung 36 in Form einer Winkelplatte ausgebildet, die eine Horizontalplatte **55** und eine senkrecht zur Horizontalplatte ausgerichtete Vertikalplatte **56** aufweist.

In der Vertikalplatte sind ein erstes Magnetelement **57** und ein zweites Magnetelement **58** angeordnet, die mit den Magnetelementen des Laserempfängers 33 eine Magnetverbindung bilden (FIG. 2). Alternativ zur Anordnung in der Vertikalplatte können das erste und zweite Magnetelement in der Horizontalplatte angeordnet sein und mit Magnet- bzw. Stahlelementen des Laserempfängers 33 eine Magnetverbindung bilden.

Mithilfe des Drehgelenkes 37 ist die Winkelplatte 36 um die Drehachse 39 in einem Winkelbereich zwischen einem ersten Winkel θ₁ und einem zweiten Winkel θ₂ verstellbar. Im Ausführungsbeispiel ist die Winkelplatte 36 in einem Winkelbereich von ca. 90° zwischen dem ersten Winkel θ₁ von 0° und dem zweiten Winkel θ₂ von ca. 90° verstellbar.

**FIGN. 4A****, B** zeigen das Zubehörteil 30 der FIG. 2 in einer ersten Drehposition (FIG. 4A) und in einer zweiten Drehposition (FIG. 4B). Die Grundplatte 35 ist mit einer Rückseite **59,** die der Vorderseite 38 gegenüberliegt, auf der Arbeitsfläche 32 angeordnet.

Die Sichtbarkeit der Laserlinie 31 ist unter anderem abhängig vom Winkel, unter dem der Laserstrahl, den ein Rotationslaser oder Linienlaser erzeugt, auf das Sensorelement 44 des Laserempfängers 33 auftrifft, wobei ein senkrechtes Auftreffen bevorzugt ist. Die erste Drehposition (FIG. 4A) entspricht dem ersten Winkel θ₁ von 0° und die zweite Drehposition (FIG. 4B) zeigt einen Zwischenwinkel von ca. 45° im Winkelbereich des Drehgelenkes 37 zwischen dem ersten und zweiten Winkel.

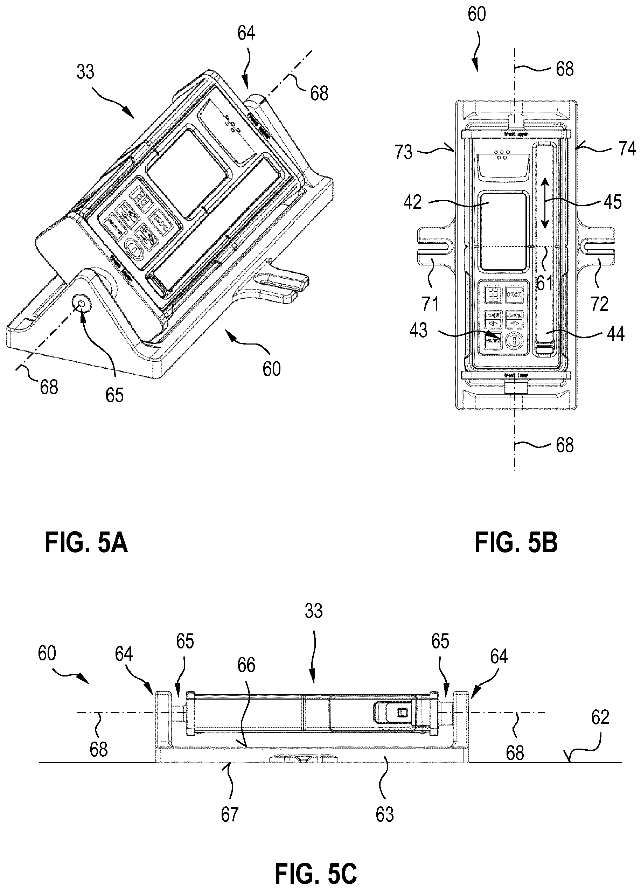

**FIGN. 5A-C** zeigen eine zweite Ausführungsform eines erfindungsgemäßen Zubehörteils **60** zum Übertragen einer Laserlinie **61** auf eine Arbeitsfläche **62.** Das Zubehörteil 60 ist mit dem Laserempfänger 33 kombiniert und wird vom Bediener an die als Boden ausgebildete Arbeitsfläche 62 gehalten. Dabei zeigt FIG. 5A das Zubehörteil 60 und den Laserempfänger 33 in einer dreidimensionalen Darstellung, FIG. 5B in einer Ansicht auf die Vorderseite des Laserempfängers 33 und FIG. 5C in einer Ansicht auf eine Seitenfläche des Laserempfängers 33.

Das Zubehörteil 60 umfasst eine Grundplatte **63,** eine Verbindungseinrichtung **64,** die das Zubehörteil 60 mit dem Laserempfänger 33 verbindet, und ein Drehgelenk **65.** Die Grundplatte 63 weist eine Vorderseite **66** und eine der Vorderseite 66 gegenüberliegende Rückseite **67** auf.

Das Drehgelenk 65 verbindet die Verbindungseinrichtung 64 mit der Grundplatte 63, wobei die Verbindungseinrichtung 64 um eine Drehachse **68** relativ zur Grundplatte 63 drehbar ist. Mithilfe des Drehgelenkes 65 ist die Verbindungseinrichtung 64 um die Drehachse 68 in einem Winkelbereich zwischen einem ersten Winkel θ₁ und einem zweiten Winkel θ₂ verstellbar. Im Ausführungsbeispiel ist die Verbindungseinrichtung 64 in einem Winkelbereich von ca. 90° zwischen dem ersten Winkel θ₁ von ca. -45° und dem zweiten Winkel θ₂ von ca. 45° verstellbar.

Um den Bediener beim Übertragen der Laserlinie 61 auf die Arbeitsfläche 62 zu unterstützen, weist das Zubehörteil 60 ein erstes Markierungselement **71** und ein zweites Markierungselement **72** auf, die an der Grundplatte 63 befestigt sind. Das erste und zweite Markierungselement 71, 72 sind als feste Anzeichenkerbe ausgebildet, die an den Seitenflächen der Grundplatte 63 befestigt sind. Das erste Markierungselement 71 ist an einer ersten Seitenfläche **73** der Grundplatte 63 befestigt und das zweite Markierungselement 72 ist an einer zweiten Seitenfläche **74** der Grundplatte 63 befestigt.

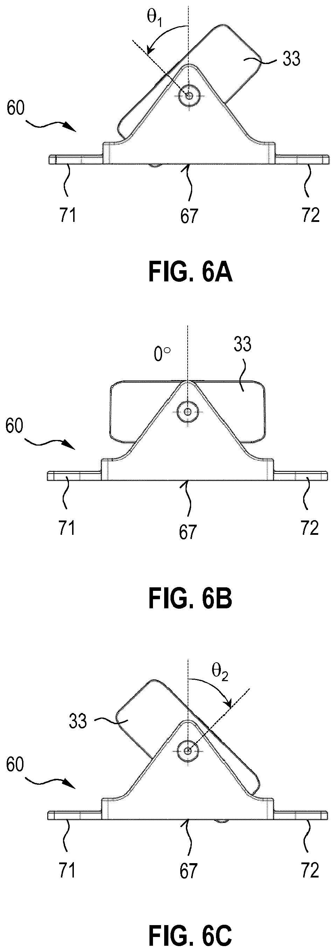

**FIGN. 6A-C** zeigen das Zubehörteil 60 der FIG. 5 in drei verschiedenen Drehpositionen. Das Zubehörteil 60 ist um die Drehachse 68 zwischen dem ersten Winkel θ₁ und dem zweiten Winkel θ₂ verstellbar. FIG. 6A zeigt das Zubehörteil 60 in einer ersten Drehposition, FIG. 6B in einer zweiten Drehposition und FIG. 6C in einer dritten Drehposition.

Die Sichtbarkeit der Laserlinie 61 ist unter anderem abhängig vom Winkel, unter dem der Laserstrahl, den ein Rotationslaser oder Linienlaser erzeugt, auf das Sensorelement 44 des Laserempfängers 33 auftrifft, wobei ein senkrechtes Auftreffen bevorzugt ist. Die erste Drehposition des Zubehörteils 60 (FIG. 6A) entspricht dem ersten Winkel θ₁ von -45°, die zweite Drehposition des Zubehörteils 60 (FIG. 6B) zeigt einen Zwischenwinkel von ca. 0° im Winkelbereich des Drehgelenkes 65 zwischen dem ersten und zweiten Winkel und die dritte Drehposition des Zubehörteils 60 (FIG. 6C) entspricht dem zweiten Winkel θ₂ von +45°.

## Patentansprüche

1. Zubehörteil (30; 60) für einen Laserempfänger (33) zum Übertragen einer Laserlinie (31; 61) auf eine Arbeitsfläche (32; 62), umfassend:
▪ eine Grundplatte (35; 63) mit einer Vorderseite (38; 66) und einer Rückseite (59; 67), mit der das Zubehörteil (30; 60) auf der Arbeitsfläche (32; 62) anordbar ist,
▪ eine Verbindungseinrichtung (36; 64) zum Verbinden des Laserempfängers (33) mit dem Zubehörteil (30; 60) und
▪ ein Drehgelenk (37; 65), das zwischen der Grundplatte (35; 63) und der Verbindungseinrichtung (36; 64) angeordnet ist, wobei die Verbindungseinrichtung (36; 64) um eine Drehachse (39; 68) relativ zur Grundplatte (35; 63) zwischen einem ersten Winkel (θ₁) und einem zweiten Winkel (θ₂) drehbar ist.

2. Zubehörteil nach Anspruch 1, **dadurch gekennzeichnet, dass** das Drehgelenk (37; 65) in mindestens einer Drehposition zwischen dem ersten Winkel (θ₁) und dem zweiten Winkel (θ₂) arretierbar ist.

3. Zubehörteil nach Anspruch 2, **dadurch gekennzeichnet, dass** das Drehgelenk (37; 65) in mehreren Drehpositionen zwischen dem ersten Winkel (θ₁) und dem zweiten Winkel (θ₂) arretierbar ist.

4. Zubehörteil nach Anspruch 3, **dadurch gekennzeichnet, dass** das Drehgelenk (37; 65) in jeder Drehposition zwischen dem ersten Winkel (θ₁) und dem zweiten Winkel (θ₂) arretierbar ist.

5. Zubehörteil nach einem der Ansprüche 1 bis 4, **dadurch gekennzeichnet, dass** das Zubehörteil (30; 60) ein Markierungselement (47, 48; 71, 72) aufweist, das an einer Seitenfläche (51, 53; 73, 74) der Grundplatte (35; 63) angeordnet ist.

6. Zubehörteil nach Anspruch 5, **dadurch gekennzeichnet, dass** das Markierungselement (47, 48) als klappbares Lineal um eine Schwenkachse (52, 54) zwischen einer eingeklappten Position und einer ausgeklappten Position verstellbar ist.

7. Zubehörteil nach Anspruch 6, **dadurch gekennzeichnet, dass** die Schwenkachse (52, 54) senkrecht zur Drehachse (39) des Drehgelenkes (37) angeordnet ist.

8. Zubehörteil nach einem der Ansprüche 1 bis 4, **dadurch gekennzeichnet, dass** das Zubehörteil (30; 60) ein erstes Markierungselement (47; 71), das an einer ersten Seitenfläche (51; 73) der Grundplatte (35; 63) angeordnet ist, und ein zweites Markierungselement (48; 72), das an einer zweiten Seitenfläche (53; 74) der Grundplatte (35; 63) angebracht ist, aufweist.

9. Zubehörteil nach Anspruch 8, **dadurch gekennzeichnet, dass** das erste Markierungselement (47) als klappbares erstes Lineal um eine erste Schwenkachse (52) zwischen einer eingeklappten Position und einer ausgeklappten Position verstellbar ist und das zweite Markierungselement (48) als klappbares zweites Lineal um eine zweite Schwenkachse (54) zwischen einer eingeklappten Position und einer ausgeklappten Position verstellbar ist.

10. Zubehörteil nach Anspruch 9, **dadurch gekennzeichnet, dass** die erste Schwenkachse (52) senkrecht zur Drehachse (39) des Drehgelenkes (37) angeordnet ist und die zweite Schwenkachse (54) senkrecht zur Drehachse (39) des Drehgelenkes (37) angeordnet ist.

11. Zubehörteil nach einem der Ansprüche 1 bis 4, **dadurch gekennzeichnet, dass** das Zubehörteil (30; 60) eine Sprüheinrichtung aufweist, die einen Behälter, ein Steuerelement und ein Betätigungselement umfasst.

12. Zubehörteil nach Anspruch 11, **dadurch gekennzeichnet, dass** die Sprüheinrichtung eine Benutzerschnittstelle und/oder eine Schnittstelle zum Laserempfänger (33) aufweist.
